# EUROPÄISCHE PATENTSCHRIFT

(11) **EP 1 743 227 B1**
(45) Veröffentlichungstag und Bekanntmachung des Hinweises auf die Patenterteilung: **18.08.2010**
(21) Anmeldenummer: 05742797.3
(22) Anmeldetag: 27.04.2005
(51) Int. Cl.: G05B 19/418

(54) **ELEKTRISCHES FELDGERÄT FÜR DIE PROZESSAUTOMATISIERUNG**
ELECTRIC FIELD DEVICE FOR USE IN PROCESS AUTOMATION
APPAREIL DE TERRAIN ELECTRIQUE POUR L'AUTOMATISATION DE PROCESSUS

(30) Priorität: 27.04.2004 DE 102004020577
(43) Veröffentlichungstag der Anmeldung: 17.01.2007
(73) Patentinhaber: SIEMENS AKTIENGESELLSCHAFT, 80333 München (DE)
(72) Erfinder: BRAUN, Michael, 76770 Hatzenbühl (DE)
(86) Internationale Anmeldenummer: PCT/EP2005/004519
(87) Internationale Veröffentlichungsnummer: WO 2005/106606

(56) Entgegenhaltungen:
- EP-A- 0 994 350
- WO-A-2005/001699
- US-A- 2003 102 367
- US-A1- 2002 080 032

## Beschreibung

Die Erfindung betrifft ein elektrisches Feldgerät für die Prozessautomatisierung, das an einem Einbauort im Prozess angeordnet ist.

In der Prozessautomatisierung üben Feldgeräte an ihren Einbauorten im Prozess vorgegebene Mess-, Steuer- und Regelungsfunktionen aus. Ein Beispiel hierfür ist die Messung des Stoffdurchflusses durch eine Rohrleitung. Dabei sind die Feldgeräte oft auf zusätzliche Informationen aus ihrer unmittelbaren Prozessumgebung angewiesen. Die benötigten Informationen können den Einbauort, die für das Feldgerät vorgesehene Busadresse oder Prozessparameter betreffen, wie im Beispiel eines Ultraschall-Durchflussmessumformers der Nenndurchmesser und das Material der stoffführenden Rohrleitung, auf der der Messumformer montiert ist oder welche als Messrohr eine Komponente des Messumformers darstellt und mit diesem im Prozess eingebaut wird. Bisher werden die Informationen über die Komponenten von Feldgeräten bei deren Herstellung bzw. Umrüstung erfasst und in den Feldgeräten als Daten abgespeichert. Die übrigen für das Feldgerät relevanten Informationen aus der Prozessumgebung werden unmittelbar vor oder nach dem Einbau des Feldgerätes erfasst und diesem über seine Busschnittstelle zugeführt. Zu diesem Zeitpunkt muss auch die Busadresse des Feldgerätes erfasst werden. Dies geschieht bisher über eine Vor-Ort-Bedienung oder für jedes einzelne Feldgerät über seine Busschnittstelle, wobei im letzteren Fall die Feldgeräte einzeln angeschlossen werden und ihnen danach durch eine entsprechende Software die jeweilige Busadresse zugewiesen wird.

Mit Transpondern und einem Lese- oder Schreib-/Lesegerät arbeitende Identifikationssysteme, darunter insbesondere RFID-Systeme (Radio Frequency Identification), sowie ihre Verwendung bei der Zutrittskontrolle, Tieridentifikation, Wegfahrsperre in Kraftfahrzeugen, Abfallentsorgung und in der industriellen Fertigung sind allgemein bekannt.

Aus der EP 0 994 350 A1 ist ein Messgerät für die Laboranalyse bekannt, das eine Leseeinheit zum berührungslosen Lesen von Daten mit nach den Grundsätzen der "Guten Laborpraxis" erforderlichen Informationen enthält. Diese Daten umfassen u. a. Kalibrierdaten von Kalibrierflüssigkeiten, Kalibrierdaten von Messsonden, Informationen zur Identifizierung von zu analysierenden Proben und Informationen zur Identifizierung von Bedienpersonen und sind in RFID-Etiketten abgespeichert, welche an den die Kalibrierflüssigkeiten enthaltenden Behältern, den Messsonden, den Probengefäßen bzw. an den Bedienpersonen angebracht sind.

Der Erfindung liegt die Aufgabe zugrunde, die Versorgung von Feldgeräten mit Informationen aus ihrer Prozessumgebung zu vereinfachen.

Gemäß der Erfindung wird die Aufgabe dadurch gelöst, dass bei dem Feldgerät der eingangs angegebenen Art im Bereich des Einbauortes mindestens ein Transponder befestigt ist, der in einem Speicher Daten mit vorgegebenen Informationen über die Prozessumgebung des Feldgerätes enthält, und dass das Feldgerät eine Leseeinheit zum berührungslosen Lesen der Daten und eine Auswerteeinheit zur Verwertung der Informationen für die von dem Feldgerät im Rahmen der Prozessautomatisierung auszuführenden Funktionen enthält.

Der wesentliche Vorteil des erfindungsgemäßen Feldgeräts besteht darin, dass dieses mit den Transpondern kommuniziert und sich so die benötigten Informationen aus der Prozessumgebung selbst beschafft. Die Kommunikation kann einmalig oder mehrfach zu bestimmten Zeitpunkten erfolgen, wobei die von dem Feldgerät erfassten Daten in diesem zwischengespeichert werden, so dass es nicht zu einer Nichtverfügbarkeit der Daten kommt, wenn die Kommunikation zeitweise nicht möglich sein sollte. Eine dauerhafte Unterbrechung der Kommunikation wird von dem Feldgerät erkannt und kann zu einer entsprechenden Fehlermeldung führen.

Die in dem Transponder enthaltenen Informationen über die Prozessumgebung des Feldgerätes umfassen vorzugsweise dessen Einbauort, die für das Feldgerät vorgesehene Busadresse und/oder für den Einbauort spezifische Prozessparameter, darunter insbesondere die Abmessungen einer Leitung oder eines Behälters zur Führung bzw. Aufnahme von Stoffen, die Materialart der Leitung bzw. des Behälters und/oder die Art des von dem Feldgerät zu messenden, steuernden oder zu regelnden Stoffes. So benötigt beispielsweise ein Ultraschall-Durchflussmessumformer zur Messung des Stoffflusses durch eine Rohrleitung Informationen über deren Nenndurchmesser und Material sowie gegebenenfalls Informationen über die Art des Stoffes. Ein die Zusammensetzung eines Gasgemischs aufgrund seiner Wärmeleitfähigkeit bestimmender Analysator benötigt beispielsweise Informationen über die beteiligten Gaskomponenten.

Bei dem verwendeten Transponder handelt es sich vorzugsweise um einen passiven Transponder, der ohne eigene Energiequelle auskommt und die benötigte Energie von dem Feldgerät mittels magnetischer oder elektromagnetischer Felder oder durch Licht erhält.

Im einfachsten Fall ist der Transponder fest programmiert und enthält einen Nur-Lesespeicher. Vorzugsweise ist jedoch der Speicher des Transponders ein Schreib-/Lesespeicher, wobei die für den Transponder vorgesehenen Daten dem Feldgerät, beispielsweise über seine Busschnittstelle, zuführbar und aus dem Feldgerät berührungslos in den Transponder übertragbar sind.

Zur weiteren Erläuterung der Erfindung wird im Folgenden auf die Zeichnung Bezug genommen, die in
- Figur 1: ein Ausführungsbeispiel für das erfindungsgemäße Feldgerät mit einem zugeordneten Transponder und in
- Figur 2: ein Blockschaltbild des Feldgeräts mit dem Trans- ponder zeigt.

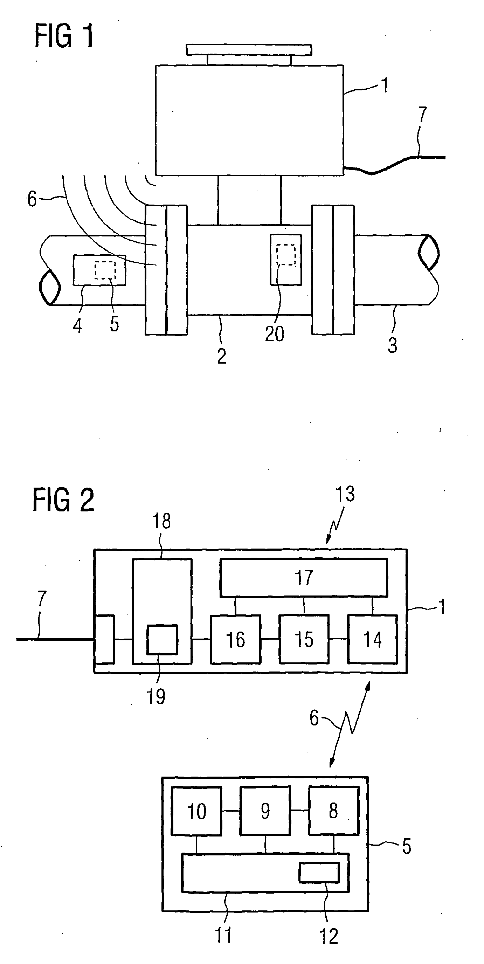

Figur 1 zeigt ein Feldgerät 1, beispielsweise einen Druckmessumformer, das über eine Flanschverbindung 2 in einer Rohrleitung 3 eines beispielsweise stoffverarbeitenden Prozesses eingebaut ist. An der Rohrleitung 3 oder einer sonstigen geeigneten Stelle wie zum Beispiel der Flanschverbindung 2 ist ein Etikett 4 mit einem Transponder 5 befestigt. Das Feldgerät 1 kommuniziert über Funk 6 mit dem Transponder 5 und über einen Bus 7 mit einem hier nicht gezeigten Prozessautömatisierungssystem, dessen Bestandteil das Feldgerät 1 ist.

Wir Figur 2 zeigt, enthält der Transponder 5 eine Antenne 8, einen Umsetzer 9, einen Schreib-/Lesespeicher 10 und eine Steuerlogik 11 mit einer Stromversorgung 12 für die Bauteile 5 bis 11. Der Umsetzer 9 setzt die analogen Empfangssignale der Antenne 8 in für den Speicher 10 verwertbare digitale Signale bzw. die aus dem Speicher 10 auszulesenden Daten in analoge Sendesignale um. Der Ablauf wird dabei von der Steuerlogik 11 gesteuert und überwacht. Die Stromversorgung 12 entzieht die benötigte Energie aus dem Empfangssignal der Antenne 8.

Das Feldgerät 1 enthält eine kombinierte Sende-/Leseeinheit 13, die ebenso wie der Transponder 5 eine Antenne 14, einen Umsetzer 15, einen Schreib-/Lesespeicher 16 und eine Steuerlogik 17 aufweist. Im Unterschied zu dem Transponder 5 werden aber die Bauteile 14 bis 17 sowie die Feldgerätesteuerung 18 über den Bus 7 mit Energie versorgt. Die Feldgerätesteuerung 18 enthält eine Auswerteeinheit 19 für die in dem Speicher 16 enthaltenen Daten.

Die von dem Feldgerät benötigten Informationen über die Prozessumgebung, hier z. B. die Busadresse, liegen entweder in dem Speicher 10 des Transponders 5 vor oder werden dem Feldgerät 1 über den Bus 7, ein Programmiergerät oder durch direkte manuelle Eingabe zugeführt und dann von dem Feldgerät 1 an den Transponder 5 übertragen.

Das Feldgerät 1, oder das beispielsweise nach einem Defekt neu im Prozess eingebaute Austauschgerät, sendet in vorgegebenen Zeitabständen ein Abfrage- oder Lesesignal, auf dessen Frequenz oder Codierung der Transponder 5 anspricht. Der Transponder 5 entzieht dabei dem Abfrage- oder Lesesignal die von ihm benötigte Energie und sendet die in dem Speicher 10 enthaltenen Daten. Diese Daten werden von dem Feldgerät 1 empfangen und Ihr Informationsgehalt in der Auswerteeinheit 19 für die Feldgerätesteuerung 18 ausgewertet. Die Informations- und Energieübertragung zum Transponder 5 kann auf demselben Wege oder auf unterschiedlichen Wegen, beispielsweise durch Funkübertragung einerseits und induktive Kopplung andererseits erfolgen.

Wie Figur 1 zeigt, können außer dem Transponder 5 weitere Transponder 20 zur Bereitstellung weiterer Informationen für das Feldgerät 1 vorgesehen sein.

## Patentansprüche

1. Elektrisches Feldgerät für die Prozessautomatisierung, das an einem Einbauort im Prozess angeordnet ist, **dadurch gekennzeichnet, dass** im Bereich des Einbauortes mindestens ein Transponder (5) befestigt ist, der in einem Speicher (10) Daten mit vorgegebenen Informationen über die Prozessumgebung des Feldgerätes (1) enthält, und dass das Feldgerät (1) eine Leseeinheit (13) zum berührungslosen Lesen der Daten und eine Auswerteeinheit (19) zur Verwertung der Informationen für die von dem Feldgerät (1) im Rahmen der Prozessautomatisierung auszuführenden Funktionen enthält.

2. Feldgerät nach Anspruch 1, **dadurch gekennzeichnet, dass** mindestens eine der folgenden Informationen in dem Transponder (5) enthalten ist:
- Einbauort,
- für das Feldgerät (1) vorgesehene Busadresse,
- für den Einbauort spezifische Prozessparameter.

3. Elektrisches Feldgerät nach Anspruch 2, **dadurch gekennzeichnet, dass** mindestens einer der folgenden für den Einbauort spezifischen Prozessparameter in dem Transponder (5) enthalten ist:
- Abmessung einer Leitung (3) oder eines Behälters zur Führung bzw. Aufnahme von Stoffen,
- Materialart einer Leitung (3) oder eines Behälters zur Führung bzw. Aufnahme von Stoffen,
- Art eines von dem Feldgerät (1) zu messenden, steuernden oder regelnden Stoffes.

4. Elektrisches Feldgerät nach einem der vorangehenden Ansprüche, **dadurch gekennzeichnet, dass** es sich bei dem Transponder (5) um einen passiven Transponder handelt, dessen Energieversorgung durch das Feldgerät (1) mittels magnetischer oder elektromagnetischer Felder oder durch Licht erfolgt.

5. Elektrisches Feldgerät nach einem der vorangehenden Ansprüche, **dadurch gekennzeichnet, dass** der Speicher (10) des Transponders (5) ein Schreib-/Lesespeicher ist und dass die für den Transponder (5) vorgesehenen Daten dem Feldgerät (1) zuführbar und aus dem Feldgerät (1) berührungslos in den Transponder (5) übertragbar sind.

## Claims

1. Electric field device for process automation, which is located at an installation site in the process, **characterised in that** at least one transponder (5) is attached in the area of the installation site, and in a memory (10) contains data with predetermined information on the process environment of the field device (1), and that the field device (1) contains a read unit (13) for contactlessly reading the data and an evaluation unit (19) for processing the information for the functions to be carried out by the field device (1) within the context of process automation.

2. Field device according to claim 1, **characterised in that** at least one of the following pieces of information is contained in the transponder (5):
- installation site,
- bus address provided for the field device (1),
- specific process parameters for the installation site.

3. Electric field device according to claim 2, **characterised in that** at least one of the following specific process parameters for the installation site is contained in the transponder (5):
- dimensions of a line (3) or of a container for directing or receiving substances,
- type of material of a line (3) or of a container for directing or receiving substances,
- type of a substance to be measured, controlled or governed by the field device (1).

4. Electric field device according to one of the preceding claims, **characterised in that** the transponder (5) is a passive transponder, whose power supply is provided by the field device (1) by means of magnetic or electromagnetic fields or by light.

5. Electric field device according to one of the preceding claims, **characterised in that** the memory (10) of the transponder (5) is a read/write memory and that the data provided for the transponder (5) can be fed to the field device (1) and can be transferred from the field device (1) contactlessly into the transponder (5).

## Revendications

1. Appareil électrique de terrain pour l'automatisation de processus, qui est disposé en un emplacement de montage dans le processus, **caractérisé en ce que** dans la zone de l'emplacement de montage est fixé au moins un transpondeur ( 5 ) qui contient dans une mémoire ( 10 ) des données ayant des informations prescrites sur l'environnement de processus de l'appareil ( 1 ) de terrain et **en ce que** l'appareil ( 1 ) de terrain comporte une unité ( 13 ) de lecture pour la lecture sans contact des données et une unité ( 19 ) d'exploitation pour l'exploitation des informations pour les fonctions à réaliser par l'appareil ( 1 ) de terrain dans le cadre de l'automatisation du processus.

2. Appareil électrique de terrain suivant la revendication 1, **caractérisé en ce qu'**au moins l'une des informations suivantes est contenue dans le transpondeur :
- emplacement de montage,
- adresse de bus prévu pour l'appareil ( 1 ) de terrain,
- paramètre de processus spécifique pour l'emplacement de montage.

3. Appareil électrique de terrain suivant la revendication 2, **caractérisé en ce qu'**au moins l'un des paramètres de processus suivant spécifiques pour l'emplacement de montage est contenu dans le transpondeur ( 5 ) :
- dimension d'un conduit ( 3 ) ou d'une cuve pour le guidage ou la réception de substances,
- type de matériau d'un conduit ( 3 ) ou d'une cuve pour la conduite ou la réception de substances,
- type de substance à mesurer, à commander ou à régler par l'appareil ( 1 ) de terrain.

4. Appareil électrique de terrain suivant l'une des revendications précédentes, **caractérisé en ce que** le transpondeur ( 5 ) est un transpondeur passif dont l'alimentation en énergie s'effectue par l'appareil ( 1 ) de terrain au moyen de champs magnétiques ou électromagnétiques ou par de la lumière.

5. Appareil électrique de terrain suivant l'une des revendications précédentes, **caractérisé en ce que** la mémoire ( 10 ) du transpondeur ( 5 ) est une mémoire d'écriture/lecture et **en ce que** les données prévues pour le transpondeur ( 5 ) peuvent être envoyé à l'appareil ( 1 ) de terrain et peuvent être transmises sans contact de l'appareil ( 1 ) de terrain au transpondeur ( 5 ).
